(19)

Europäisches
Patentamt
European
Patent Office
Office européen
des brevets

(11) **EP 4 238 292 B1**

(12) **EUROPEAN PATENT SPECIFICATION**

(45) Date of publication and mention
of the grant of the patent:
**30.07.2025 Bulletin 2025/31**

(21) Application number: **21801495.9**

(22) Date of filing: **27.10.2021**

(51) International Patent Classification (IPC):
***H04L 43/0852*** (2022.01)    ***H04L 43/026*** (2022.01)
***H04L 43/0864*** (2022.01)

(52) Cooperative Patent Classification (CPC):
**H04L 43/0858;** H04L 43/026; H04L 43/0864

(86) International application number:
**PCT/EP2021/079782**

(87) International publication number:
**WO 2022/090292 (05.05.2022 Gazette 2022/18)**

(54) **ONE-WAY DELAY MEASUREMENT IN A PACKET-SWITCHED COMMUNICATION NETWORK**

EINWEGVERZÖGERUNGSMESSUNG IN EINEM PAKETVERMITTELTEN
KOMMUNIKATIONSNETZWERK

MESURE DE RETARD UNIDIRECTIONNELLE DANS UN RÉSEAU DE COMMUNICATION À
COMMUTATION DE PAQUETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2020 IT 202000025699**

(43) Date of publication of application:
**06.09.2023 Bulletin 2023/36**

(73) Proprietor: **Telecom Italia S.p.A.**
**20123 Milano (IT)**

(72) Inventor: **COCIGLIO, Mauro**
**10148 Torino (IT)**

(74) Representative: **Pietra, Giulia et al**
**Marchi & Partners S.r.l.**
**Via Vittor Pisani, 13**
**20124 Milano (IT)**

(56) References cited:
**WO-A1-2019/206862**

• **MIZRAHI HUAWEI NETWORK IO INNOVATION
LAB C ARAD G FIOCCOLA HUAWEI
TECHNOLOGIES M COCIGLIO TELECOM ITALIA
M CHEN L ZHENG HUAWEI TEC: "Compact
Alternate Marking Methods for Passive and
Hybrid Performance Monitoring; draft-mizrahi-
ippm-compact-alternate-marking-05.txt", no. 5, 7
July 2019 (2019-07-07), pages 1 - 22,
XP015133931, Retrieved from the Internet
<URL:https://tools.ietf.org/html/
draft-mizrahi-ippm-compact-alternate-mark
ing-05> [retrieved on 20190707]**
• **FIOCCOLA G ET AL: "Alternate-Marking Method
for Passive and Hybrid Performance Monitoring;
rfc8321.txt", ALTERNATE-MARKING METHOD
FOR PASSIVE AND HYBRID PERFORMANCE
MONITORING; RFC8321.TXT, INTERNET
ENGINEERING TASK FORCE, IETF; STANDARD,
INTERNET SOCIETY (ISOC) 4, RUE DES
FALAISES CH- 1205 GENEVA, SWITZERLAND,
30 January 2018 (2018-01-30), pages 1 - 33,
XP015125343**

(Cont. next page)

- **COCIGLIO TELECOM ITALIA G FIOCCOLA HUAWEI TECHNOLOGIES M NILO F BULGARELLA TELECOM ITALIA R SISTO POLITECNICO DI TORINO M: "Client-Server Explicit Performance Measurements; draft-cfb-ippm-spinbit-measurements-02.txt", no. 2, 3 July 2020 (2020-07-03), pages 1 - 26, XP015140360, Retrieved from the Internet <URL:https://tools. ietf.org/html/ draft-cfb-ippm-spinbit-measurements-02> [retrieved on 20200703]**

**Description**

**Technical field**

The present invention relates to the field of communication networks. In particular, the present invention relates to one-way delay measurements in a packet-switched communication network.

**Background art**

In a packet-switched communication network, packet flows are transmitted from source nodes to destination nodes through possible intermediate nodes. Exemplary packet-switched networks are IP (Internet Protocol) networks, Ethernet networks and MPLS (Multi-Protocol Label Switching) networks.

Each packet is transmitted at a transmission time by the source node and is received at a reception time by the destination node. The time elapsing between transmission time and reception time is typically called "one-way delay". The one-way delay of a packet mainly depends on the number of possible intermediate nodes crossed by the packet from source to destination, the processing time of the packet by each node and the propagation time along the links.

WO 2011/079857, in the name of the same Applicant, discloses a method for performing one-way delay measurements on packets carrying live traffic (namely, packets not generated for the purpose of performing the measurement) which uses an alternate marking technique whereby the packet flow to be measured is divided into blocks of packets comprising a marking bit set to a first value (e.g. "1") and blocks of packets comprising a marking bit set to a second value (e.g. "0"). The marking value is periodically switched, so that the blocks of packets marked by the first value are interleaved with the blocks of packets marked by the second value.

Techniques are also known which provide RTT (round-trip time) measurements, instead of one-way delay measurements.

B. Trammel et al.: Internet draft "The addition of a Spin Bit to the QUIC Transport Protocol draft-trammel-quic-spin-01", December 13, 2017 describes the addition of a so-called "latency spin bit" (or, briefly, "spin bit") in the QUIC header, which allows RTT measurements on a bidirectional packet flow exchanged between two nodes. According to the Internet draft, both the nodes (also termed "client" and "server") initially transmit the respective packets with the value of their spin bits set to 0. The client starts an RTT measurement by setting the value of its spin bit to 1. This change of spin bit value may be seen as an edge in the spin bit signal transmitted from client to server. As the server receives such edge, it changes the value of its own spin bit from 0 to 1. This way, the server substantially reflects the edge of the spin bit signal back to the client. As the client receives the reflected edge of the spin bit signal from the server, it switches the value of its spin bit back to 0. This may be seen as another edge in the spin bit signal transmitted from client to server, which is received at the server and reflected back to the client as described above. A rough RTT may then be measured at any intermediate measurement point placed between client and server, as the duration of a spin bit period, namely of the time lapsing between passage in a same direction (e.g. from client to server) of two consecutive edges of the spin bit signal. Further relevant prior art is provided by WO 2019/206862, Mizrahi et al., "Compact Alternate Marking Methods for Passive and Hybrid Performance Monitoring", draft-mizrahi-ippm-compact-alternate-marking-05.txt", no. 5, published on 7 July 2019, Fioccola et al., "Alternate-Marking Method for Passive and Hybrid Performance Monitoring", IETF RFC 8321, published on 30 January 2018, and Cociglio et al., "Client-Server Explicit Performance Measurements", draft-cfb-ippm-spinbit-measurements-02.txt", no. 2, published on 3 July 2020.

**Summary of the invention**

The Applicant has noticed that the above spin bit technique is capable of providing RTT measurements by using a single measurement point placed on the path of the bidirectional packet flow to be measured. However, an RTT measurement disadvantageously does not provide an indication of the contribution which each one of the two counterpropagating directions provides to the overall RTT. If a measured RTT has a critical value, it is not possible to determine which direction (e.g. upstream or downstream) is e.g. affected by a congestion and therefore mostly contributes to the RTT.

The Applicant has then tackled the problem of providing a method for transmitting a bidirectional packet flow carrying live traffic exchanged between two nodes of a packet-switched communication network, which enables one-way delay measurements by a single measurement point placed on the path of the bidirectional packet flow.

In the following description and in the claims, the expression "enabling a one-way delay measurement" will designate an operation of marking and/or conditioning the packets of the bidirectional packet flow to be measured in such a way that a one-way delay measurement can be made by a measurement point placed on the path of the packet flow, either at an intermediate position of the path or at an endpoint of the path.

According to embodiments of the present invention, the above problem is solved by a method wherein each packet of the bidirectional packet flow carrying live traffic between the two nodes comprises a marking field settable to any of one or more first marking values (also termed herein below "measurement marking value(s)") and one or more second marking values (also termed herein below "idle marking value(s)"). At respective predefined times (which may be a same predefined time for both the nodes), the nodes transmit respective marked packets (also termed herein after "start measurement packets"), namely packets of the bidirectional packet flow having their marking field set equal to a measurement marking value (the measurement marking values may be different for the two nodes). Each node then transmits the respective outgoing packets unmarked, namely with their marking field set equal to an idle value, until it receives the start measurement packet transmitted by the opposite node. In response thereto, each node transmits a further marked packet (also termed herein after "end measurement packet"), namely a further packet of the bidirectional packet flow having its marking field set equal to a measurement marking value.

Since the nodes transmit the respective start measurement packets at the same time and transmit the respective end measurement packets as they receive the start measurement packet from the opposite node, the time lapsing between transmission of the start measurement packet and end measurement packet in a certain direction basically is equal to the end-to-end one-way delay in the opposite direction.

A measurement point placed on the path of the bidirectional packet flow may then detect the packets transmitted in a certain direction, read their marking value and provide an end-to-end one-way delay measurement in the opposite direction, as a difference between detection time of the end measurement packet and detection time of the start measurement packet.

If the measurement point has a local clock synchronized with the local clocks of the two nodes, it may also provide an upstream one-way delay measurement (namely, a one-way delay measurement between the node originating the detected measurement packets and the measurement point) as a difference between detection time of the start measurement packet and predefined period T0.

If the measurement point is capable of detecting the measurement packets transmitted in both directions, end-to-end one-way measurements and upstream one-way delay measurements in the two directions may be provided, and also combined to provide a downstream one-way delay measurement in each direction (namely, a one-way delay measurement between the measurement point and the node terminating the measurement packets transmitted in that direction).

Advantageously, all the above one-way delay measurements are provided by a single measurement point placed on the path of the bidirectional packet flow to be measured. It shall be noticed that the measurement point may be implemented and operated by an entity other than the entity managing the marking of the packets at the nodes of the communication network.

According to a first aspect, the present invention provides a method for transmitting a bidirectional packet flow carrying live traffic exchanged between a first node and a second node of a packet-switched communication network, the method comprising:

a) at respective predefined times, by the first node transmitting to the second node a first marked packet of the bidirectional packet flow and by the second node transmitting to the first node a second marked packet of the bidirectional packet flow; and

b) by the first node, transmitting to the second node unmarked packets of the bidirectional packet flow until the second marked packet is received from the second node and, in response thereto, transmitting to the second node a third marked packet of the bidirectional packet flow.

Preferably, the method further comprises:

b') by the second node, transmitting to the first node unmarked packets of the bidirectional packet flow until the first marked packet is received from the first node and, in response thereto, transmitting to the first node a fourth marked packet of the bidirectional packet flow.

Preferably, the method steps are repeated cyclically.

Preferably, the respective predefined times are a same predefined time.

More preferably, the first node and the second node comprise reciprocally synchronized local clocks and step a) is started when the local clocks indicate a time n x TO, n being an integer index and TO being a predefined period.

Preferably, the predefined period TO is higher than a maximum round-trip time plus a maximum one-way delay between the first node and the second node.

More preferably, the predefined period TO is set higher than 3 times a calculated round-trip time between the first node and the second node.

According to a variant, the first marked packet and the third marked packet comprise different marking values.

According to a variant, the method further comprises:

c) by the first node, transmitting to the second node unmarked packets of the bidirectional packet flow until the fourth marked packet is received from the second node and, in response thereto, transmitting to the second node a fifth marked packet of the bidirectional packet flow.

According to a second aspect, the present invention provides a method for performing a one-way delay measurement on a bidirectional packet flow carrying live traffic exchanged between a first node and a second node of a packet-switched communication network, the method comprising the steps of the method set forth above and:

d) by a measurement point placed on a path of the bidirectional packet flow, detecting the first marked packet and the third marked packet, and providing the one-way delay measurement based on a detection time of the first marked packet and/or a detection time of the third marked packet.

Optionally, step d) comprises providing a one-way delay measurement from the second node to the first node as a time lapsing between detection of the first marked packet and detection of the third marked packet.

Alternatively or in addition, the measurement point is synchronized with the first node and step d) comprises providing a one-way delay measurement from the first node to the measurement point as a time lapsing between transmission of the first marked packet and detection of the first marked packet.

Optionally, step d) also comprises providing a round-trip time measurement between the first node and the second node as a time lapsing between detection of the first marked packet and detection of the fifth marked packet.

Alternatively or in addition, step d) comprises providing a one-way delay measurement from the first node to the second node as a time lapsing between detection of the third measurement packet and detection of the fifth measurement packet.

According to a third aspect, the present invention provides a packet-switched communication network comprising a first node and a second node exchanging a bidirectional packet flow, wherein:

a) the first node is configured to, at a first predefined time, transmit to the second node a first marked packet of the bidirectional packet flow and the second node is configured to, at a second predefined time, transmit to the first node a second marked packet of the bidirectional packet flow; and

b) the first node is further configured to transmit to the second node unmarked packets of the bidirectional packet flow until the second marked packet is received from the second node and, in response thereto, transmit to the second node a third marked packet of the bidirectional packet flow.

Preferably, the packet-switched communication network further comprises a measurement point placed on a path of the bidirectional packet flow, the measurement point being configured to detect the first marked packet and the third marked packet, and provide a one-way delay measurement based on a detection time of the first marked packet and/or a detection time of the third marked packet.

## Brief description of the drawings

The present invention will become clearer from the following detailed description, given by way of example and not of limitation, to be read with reference to the accompanying drawings, wherein:

- Figure 1 schematically shows a packet-switched communication network in which the method for performing a one-way delay measurement according to embodiments of the present invention is implemented;
- Figure 2 schematically shows the structure of a packet exchanged in the communication network of Figure 1, according to embodiments of the present invention;
- Figure 3 is a flow chart of the operation of the nodes of the communication network of Figure 1, according to an embodiment of the present invention; and
- Figure 4 is a time diagram schematically depicting the operation of the nodes according to the flow charts of Figure 3.

## Detailed description of preferred embodiments of the invention

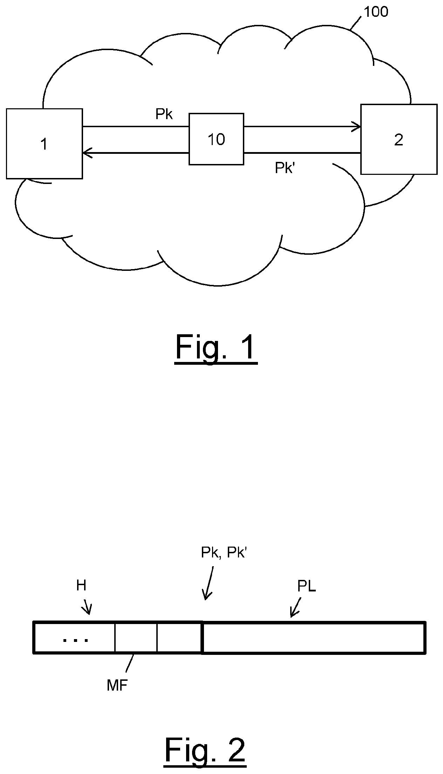

Figure 1 schematically shows a packet-switched communication network 100 configured to perform a one-way delay measurement according to an embodiment of the present invention.

The communication network 100 comprises a plurality of nodes reciprocally interconnected by physical links according to any known topology, including two nodes 1 and 2 shown in Figure 1. The nodes 1 and 2 may be connected by a single physical link or by the concatenation of several physical links and intermediate nodes (not shown in the drawings). The communication network 100 may be for instance an IP network.

The nodes 1, 2 are preferably provided with respective local clocks which are reciprocally synchronized. Such local clocks for example may cyclically count from 0 to Tmax. The synchronization error between the local clocks of the nodes 1, 2 is preferably lower than or equal to 1 ms. The synchronization between the local clocks of the nodes 1, 2 may be performed by using a synchronization protocol, such as for instance NTP (Network Time Protocol).

The nodes 1, 2 exchange a bidirectional packet flow including packets Pk transmitted from the node 1 to the node 2 and packets Pk' transmitted from the node 2 to the node 1, as schematically depicted in Figure 1. The packets Pk, Pk' carry live traffic, namely they are not generated for the purpose of the one-way delay measurement. The packets Pk may belong to a same packet flow (namely, they may all have a same source address and a same destination address, e.g. a same IP source address and a same IP destination address) or to different packet flows whose paths are overlapping between the nodes 1 and 2. Similarly, the packets Pk' may belong to a same packet flow or to different packet flows whose paths are overlapping between the nodes 2 and 1.

The packets Pk, Pk' are formatted according to a certain network protocol. By way of non limiting example, the network protocol may be the above mentioned QUIC protocol.

In particular, as schematically depicted in Figure 2, each packet Pk, Pk' comprises a payload PL comprising user data and at least one header H. In case of multiple headers, each header pertains to a different network layer. For example, each packet Pk, Pk' may comprise a network layer header (such as an IP header) and transport layer header (such as a QUIC+UDP header or a TCP header). One of the headers H (typically, the network layer header) comprises packet forwarding information, namely information allowing the packets Pk to reach the network node 2 and the packets Pk' to reach the node 1.

Each packet Pk, Pk' also preferably comprises at least one measurement dedicated field MF (also termed herein after "marking field") supporting a one-way delay measurement on the bidirectional packet flow Pk, Pk'. The marking field(s) MF may be comprised in the same header H as the packet forwarding information (as shown in Figure 2), in a different header (if any) or in the payload PL. Assuming for example that the packets Pk, Pk' comprise a network layer header (such as an IP header) and a transport layer header (such as a QUIC header), the marking field(s) MF may be comprised in the transport layer header. The marking field MF comprises one or more bits, preferably a single bit. The marking field MF may be set to anyone of two alternative marking values, namely an idle marking value M0 (e.g. "0") and measurement marking value M1 (e.g. "1"). By way of non-limiting example, if the packets Pk, Pk' are formatted according to the QUIC protocol, the marking field MF may be the spin bit comprised in the QUIC header as disclosed in the above Internet draft of B. Trammel et al..

Each node 1, 2 appropriately sets the value of the marking field MF in its respective outgoing packets Pk, Pk', before transmitting them, so as to enable a one-way delay measurement.

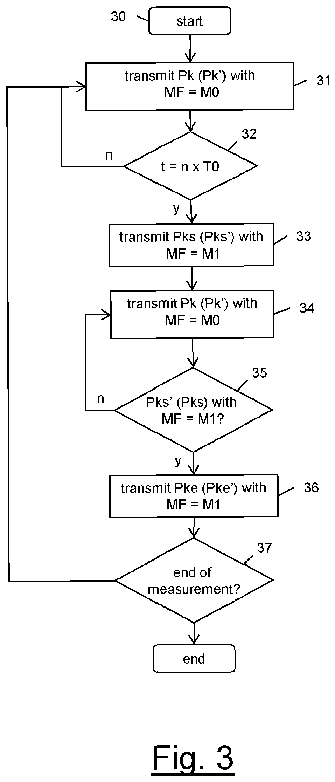

In particular, with reference to the flow chart of Figure 3, each node 1, 2 initially sets the marking field MF of its outgoing packets Pk, Pk' to the idle value M0 (step 31).

Each node 1, 2 continues transmitting its outgoing packets Pk, Pk' with their marking field MF set to the idle value M0, until its local clock indicates a respective predefined time (step 32). According to a preferred embodiment, the predefined time is t = n x TO (n being an integer index equal to 1, 2, ...) for both the nodes 1, 2. The period TO preferably is a submultiple of the maximum time Tmax counted by the local clock of the node 1, 2. For example, if Tmax is equal to 1000 ms, TO may be equal to 10 ms, 20 ms or 25 ms. If, for example, TO is equal to 25 ms, the condition at step 32 will be met at t=25 ms, t=50 ms, t=75 ms, ... and t = 1000 ms. Further considerations on the choice of T0 will be provided herein below.

When the node 1, 2 determines that t = n x TO, it preferably switches the marking value applicable to its next outgoing packet to be transmitted Pk, Pk' from the previously applied idle value M0 to the measurement value M1, thereby transmitting an outgoing packet Pks, Pks' marked, namely with its marking field MF set to the measurement value M1 (step 33). In the present description and in the claims, such outgoing packet Pks, Pks' is also termed "start measurement packet". It shall be noticed that, since the nodes 1, 2 are provided with reciprocally synchronized clocks, they perform step 33 - namely, they transmit their respective start measurement packets Pks, Pks' - substantially at the same time (where "substantially" means short of synchronization errors between their local clocks).

The node 1, 2 then switches again the applicable marking value from the measurement value M1 to the idle value M0, thereby restarting transmitting its outgoing packets Pk, Pk' unmarked, namely with their marking field MF set to the idle value M0 (step 34).

While the node 1, 2 is transmitting its outgoing packets Pk, Pk' to the other node 2, 1, it also receives incoming packets Pk', Pk from the other node 2, 1. The node 1, 2 preferably continuously reads the value of the marking field MF of such incoming packets Pk', Pk.

As long as the node 1, 2 receives incoming packets Pk', Pk with their marking field MF set to the idle value M0, it preferably continues transmitting its outgoing packets Pk, Pk' with their marking field MF set to the idle value M0 (step 34).

When, instead, the node 1, 2 receives the start measurement packet Pks', Pks with its marking field MF set to the measurement value M1 (step 35), it preferably switches again the marking value applicable to its next outgoing packet Pk, Pk' to be transmitted from the idle value M0 to the measurement value M1, thereby transmitting a further outgoing packet Pke, Pke' marked, namely with its marking field MF set to the measurement value M1 (step 36). In the present description and in the claims, such further outgoing packet Pke, Pke' is also termed "end measurement packet".

According to an advantageous variant, the node 1, 2 performs step 36 only if step 33 has been performed. In other words, the node 1, 2 transmits its end measurement packet Pke, Pke' only if the corresponding start measurement packet Pks, Pks' has been transmitted.

The node 1, 2 repeats steps 31-36 cyclically at each time t = n x TO, until the end of the measurement session (step 37).

Hence, at each cycle where both the switching steps 33 and 36 are performed, each node 1, 2 basically transmits to the opposite node 2, 1 two marked packets, namely a start measurement packet Pks, Pks' and a end measurement packet Pke, Pke'. Since both the nodes 1, 2 transmit the respective start measurement packet Pks, Pks' substantially at the same time t = n x TO (where "substantially" means short of synchronization errors between their local clocks) and transmit the respective end measurement packet Pke, Pke' as they receive the start measurement packet Pks', Pks transmitted by the opposite node 2, 1, the time lapsing between transmission of the start measurement packet Pks, Pks' and end measurement packet Pke, Pke' in a certain direction basically is equal to the end-to-end one-way delay in the opposite direction.

A measurement point 10 placed on the path of the bidirectional packet flow Pk, Pk' as depicted in Figure 1 may then detect the packets transmitted in a certain direction (e.g. the packets Pk transmitted from the node 1 to the node 2), read their marking value to identify the start measurement packet Pks and end measurement packet Pke and provide for each cycle an end-to-end one-way delay measurement OWD($2\rightarrow1$) in the opposite direction (namely from the node 2 to the node 1), as a difference between detection time of the end measurement packet Pke and detection time of the start measurement packet Pks.

If also the measurement point 10 has a local clock synchronized with the local clocks of the nodes 1, 2, it may also provide for each cycle an upstream one-way delay measurement OWD($1\rightarrow10$) (namely, a one-way delay measurement between the node 1 originating the start and end measurement packets and the measurement point 10) as a difference between detection time of the start measurement packet Pks and start time of the cycle n x T0.

If the measurement point 10 is capable of detecting also marked packets transmitted from the node 2 to the node 1, for each cycle also an end-to-end one-way delay measurement OWD($1\rightarrow2$) from the node 1 to the node 2 and an upstream one-way delay measurement OWD($2\rightarrow10$) may be provided.

All such measurements may be combined to provide a downstream one-way delay measurement in each direction, according to the following equations:

$$OWD(10\rightarrow2) = OWD(1\rightarrow2) - OWD(1\rightarrow10);$$

$$OWD(10\rightarrow1) = OWD(2\rightarrow1) - OWD(2\rightarrow10).$$

Advantageously, all the above one-way delay measurements are provided by a single measurement point 10 placed on the path of the bidirectional packet flow Pk, Pk' to be measured.

According to an embodiment, step 33 is performed only if the next outgoing packet Pk, Pk' to which the measurement marking value M1 shall be applied is transmitted by the node 1, 2 within a predefined time T2 since the start time n x TO of the current cycle. Alternatively or in addition, step 36 is performed only if the next outgoing packet Pk, Pk' to which the measurement marking value M1 shall be applied is transmitted by the node 1, 2 within a predefined time T2' (equal to or different from T2) since reception of the start measurement packet transmitted by the opposite node 2, 1. T2 and T2' for example may be equal to 1 ms. Since packets Pk, Pk' belong to a real traffic flow and their transmission times are unpredictable, this guarantees that for each cycle a start measurement packet is provided only if its transmission time is not too different from the one assumed by the measurement point 10, and that for each cycle an end measurement packet is provided only if its transmission time is not too different from the reception time of the start measurement packet transmitted from the opposite node. Only accurate one-way measurements are accordingly provided.

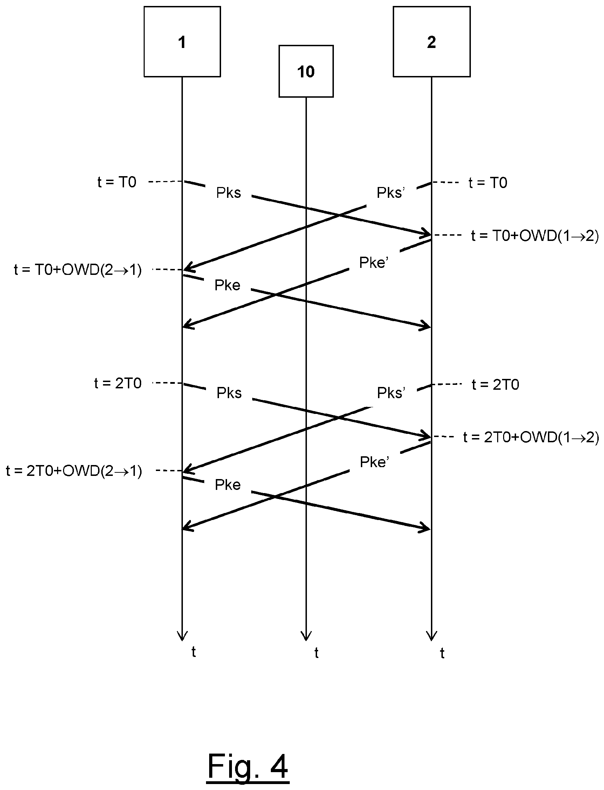

Figure 4 is an example of the operation of the nodes 1 and 2 and measurement point 10 according to the flow chart of Figure 3. In Figure 4, for simplicity, the only packets of the bidirectional packet flow Pk, Pk' depicted are the start measurement packets and end measurement packets.

Before the measurement is started, both the nodes 1, 2 apply to their outgoing packets the idle marking value MO (step 31). Substantially at a same time TO (where "substantially" means short of synchronization errors between their local clocks), both the nodes 1, 2 switch the marking value applicable to the next respective outgoing packet Pk, Pk' to be transmitted from the idle value M0 to the measurement marking value M1, thereby transmitting the respective start measurement packets Pks, Pks' (step 33). Then they switch back the applicable marking value to the idle value M0 (step 34).

Due to the propagation delay from the node 1 to the node 2, the start measurement packet Pks is received at the node 2 at t = TO + OWD($1\rightarrow2$), while due to the propagation delay from the node 2 to the node 1, the start measurement packet Pks' is received at the node 1 at t = TO + OWD($2\rightarrow1$). By way of non limiting example, it is assumed that - due to asymmetry of the connection between the nodes 1 and 2 - the one-way delay OWD($1\rightarrow2$) is shorter than the one-way delay OWD($2\rightarrow1$). Hence, the start measurement packet Pks is received at the node 2 before the start measurement packet Pks' is received at the node 1.

At = TO + OWD($1\rightarrow2$), the node 2 receives the start measurement packet Pks (step 35). Hence, the node 2 preferably switches again the marking value applicable to the next outgoing packet Pk' to be transmitted from the idle value M0 to the measurement marking value M1, thereby transmitting the end measurement packet Pke' (step 36). Then the node 2 switches back the applicable marking value to the idle value M0 (step 31).

On the other hand, at t = TO + OWD(2→1), the node 1 receives the start measurement packet Pks' (step 35). Hence, the node 1 preferably switches again the marking value applicable to the next outgoing packet Pk to be transmitted from the idle value M0 to the measurement marking value M1, thereby transmitting the end measurement packet Pke (step 36). Then the node 1 switches back the applicable marking value to the idle value M0 (step 31).

Both the nodes 1 and 2 continue to transmit their respective outgoing packets Pk, Pk' with marking field MF equal to the idle value M0, until a new cycle begins at t = 2T0. The operation of the nodes 1, 2 during the second cycle is the same as in the first cycle, hence a detailed description will not be repeated.

The measurement point 10 may then detect the start measurement packets and end measurement packets and provide one-way delay measurements based on them.

In particular, at the first cycle the measurement point 10 may provide an end-to-end one-way delay measurement OWD(2→1) as the time lapsing between detection of the start measurement packet Pks transmitted by the node 1 and detection of the end measurement packet Pke transmitted by the node 1. If the measurement point 10 has a local clock synchronized with the nodes 1, 2, it may also provide an upstream one-way delay measurement OWD(1→10) as the time lapsing between cycle start time TO and detection of the start measurement packet Pks. The same measurements may be repeated for the second cycle and for any subsequent cycle.

Similarly, at the first cycle the measurement point 10 may provide an end-to-end one-way delay measurement OWD(1→2) as the time lapsing between detection of the start measurement packet Pks' transmitted by the node 2 and detection of the end measurement packet Pke' transmitted by the node 2. If the measurement point 10 has a local clock synchronized with the nodes 1, 2, it may also provide an upstream one-way delay measurement OWD(2→10) as the time lapsing between cycle start time TO and detection of the start measurement packet Pks'. The same measurements may be repeated for the second cycle and for any subsequent cycle.

Such measurements may also be combined to provide a downstream one-way delay measurement in each direction, according to the equations set forth above.

As described above, the period T0 preferably is a submultiple of the maximum time Tmax counted by the local clocks of the nodes 1, 2.

The period TO is also preferably chosen so as to maximize the probability that, within each cycle of duration TO, the conditions whereby the nodes 1, 2 decide to perform the switching steps 33 and 36 are met. Moreover, it shall be noticed that if, for example, during a cycle a start measurement packet (e.g. Pks) is lost, the first marked packet Pk (namely, with marking field MF equal to M1) which the node 2 receives during the cycle actually is the end measurement packet Pke. However, a start measurement packet and a end measurement packet are distinguishable from each other by the nodes 1, 2 only based on the order according to which they are received (or detected) within the cycle. Hence, upon reception of the end measurement packet Pke, in response thereto the node 2 erroneously transmits its end measurement packet Pke'. The end measurement packet Pke' is then received at the node 1 at a reception time which is delayed - relative to the cycle start time - by RTT plus the one-way delay from the node 2 to the node 1. In order to avoid measurement errors from that cycle on, it is preferable that such reception time occurs before the next cycle is started.

For this purpose, if a rough estimate of the maximum RTT and maximum one-way delay between the nodes 1 and 2 is known a priori (e.g. based on the length of the connection between the nodes 1 and 2), T0 is preferably set to a value higher than the maximum RTT plus the maximum one-way delay, for example TO =1000 ms.

According to a variant, the period TO is set to a value higher than 3 times a previously calculated RTT between the nodes 1, 2. For example, the period TO may be set equal to the minimum (or second minimum) submultiple of Tmax which is higher than 3 times a previously calculated RTT between the nodes 1, 2. According to this variant, the RTT may be calculated before start of a one-way delay measurement session by using any known technique for calculating the RTT.

Once the RTT has been measured, the rule for calculating TO as a function of the measured RTT shall be the same for both the nodes 1, 2 (and possibly the measurement point 10), so that the period TO is substantially the same for both the nodes 1, 2 (and possibly the measurement point 10). Then, both the nodes 1, 2 start monitoring their local clocks for initiating the first measurement cycle when their local clocks become equal to n x T0.

It may be appreciated that the nodes 1, 2 may start monitoring their respective local clocks at different times. Hence, during the first cycle, only one node 1, 2 might transmit the respective start measurement packet, while the other node 2,1 might still be completing the initialization or calibration phase preliminary to the monitoring. The node 1, 2 which transmitted the respective start measurement packet would therefore receive no start measurement packet from the other node during the first cycle, and hence it would not transmit its end measurement packet. In this case, for that cycle and in that direction the measurement point 10 will detect a single packet with marking field MF equal to the measurement value M1. In order to obviate this drawback, the node 1, 2 which likely completes the initialization or calibration phase first is preferably configured to wait a predefined time (e.g. RTT/2) before it starts monitoring its own local clock for initiating the first measurement cycle.

However, other mechanisms (such as packet loss affecting the bidirectional packet flow), may cause a loss of the start measurement packet and/or the end measurement packet, at any cycle and in any direction.

If, due to any of the above mechanisms, for a cycle the measurement point 10 detects a single marked packet or no marked packet in a certain direction, it preferably ignores or skips that cycle, so that no one-way delay measurements are provided for that cycle.

Further, as discussed above, if during a cycle a start measurement packet (e.g. Pks) is lost, the first packet Pk with marking field MF equal to M1 which the node 2 receives during the cycle actually is the end measurement packet Pke. However, since the start measurement packet and end measurement packet are distinguishable from each other by the nodes 1, 2 (and by the measurement point 10 too) only based on the order according to which they are received (or detected) within the cycle, upon reception of the end measurement packet Pke the node 2 transmits its end measurement packet Pke'. In this case, the one-way delay measurement based on the detection time of the end measurement packet Pke' is erroneous. Such erroneous measurement may be detected e.g. by a post-processing of the measurement results which may be performed e.g. by a central manager.

Though in the above description it has been assumed that both the nodes 1, 2 use a same measurement marking value M1 and a same idle marking value M0 for marking their respective outgoing packets Pk, Pk', this is not limiting. According to other embodiments, each node 1, 2 may use a respective measurement marking value and/or a respective idle marking value. For example, if the marking field MF is a single-bit field, the node 1 may use "1" as measurement value and "0" as idle value, while the node 2 may use "0" as measurement value and "1" as marking value.

According to an advantageous variant, the marking field MF may comprise at least two bits, thereby providing at least 4 possible marking values including, for example, an idle marking value M0 (e.g. "00") and 3 measurement marking values M1, M2, M3 (e.g. "01", "10" and "11").

According to such advantageous variant, a first measurement marking value M1 may be used for marking the start measurement packets Pks, Pks' at step 33, whereas a second marking value M2 may be used for marking the end measurement packets Pke, Pke'. This advantageously makes the start measurement packets Pks, Pks' and end measurement packets Pke, Pke' reciprocally distinguishable by both the nodes 1, 2 and the measurement point 10. Hence, for example, the node 1, 2 does not risk to erroneously transmit its end measurement packet Pke, Pke' in response to reception of the end measurement packet Pke', Pke from the other node 2, 1, in case the start measurement packet Pks', Pks from the other node 2, 1 has been lost.

Further, the third marking value M3 may be used for additional purposes. For example, when the node 1, 2 receives the end measurement packet Pke', Pke with its marking field MF set to the second measurement value M2 from the other node 2, 1, according to this variant it preferably switches again the marking value applicable to its next outgoing packet Pk, Pk' to be transmitted from the idle value M0 to the third measurement value M3, thereby transmitting an outgoing packet $Pk_{RT}$, $Pk_{RT}'$ with its marking field MF set to the third measurement value M3. Such further outgoing packet $Pk_{RT}$, $Pk_{RT}'$ is also termed "round trip measurement packet".

The measurement point 10 may use the round trip measurement packets $Pk_{RT}$, $Pk_{RT}'$ to provide the following additional measurements:

- an RTT measurement as the time lapsing between detection of the start measurement packet Pks, Pks' and detection of the round trip measurement packet $Pk_{RT}$, $Pk_{RT}'$ transmitted in a same direction during a same cycle; and/or
- an end-to-end one-way delay measurement in the same direction as that of the detected packets, as the time lapsing between detection time of the end measurement packet Pke, Pke' and detection time of the round trip measurement packet $Pk_{RT}$, $Pk_{RT}'$ transmitted in a same direction during a same cycle.

Though, according to such variant, the start measurement packet and end measurement packet are reciprocally distinguishable (and

hence the node 1, 2 does not risk to erroneously transmit the respective end measurement packet in response to reception of the end measurement packet from the other node 2, 1), it is anyway preferable that the round-trip measurement packet $Pk_{RT}$, $Pk_{RT}'$ transmitted during a certain cycle is received before the next cycle begins. For this reason, also according to this variant, T0 is preferably higher than the maximum RTT plus the maximum one-way delay between the nodes 1, 2, or at least higher than 3 times an RTT between the nodes 1, 2 which has been previously measured according to any known technique for measuring the RTT.

## Claims

1. A method for transmitting a bidirectional packet flow (Pk, Pk') carrying live traffic exchanged between a first node (1) and a second node (2) of a packet-switched communication network (100), said method comprising:

   a) at respective predefined times, by said first node (1) transmitting to said second node (2) a first marked packet (Pks) of said bidirectional packet flow (Pk, Pk') and by said second node (2) transmitting to said first node (1) a second marked packet (Pke) of said bidirectional packet flow (Pk, Pk'), and

b) by said first node (1), transmitting to said second node (2) unmarked packets of said bidirectional packet flow (Pk, Pk') until said second marked packet (Pks') is received from said second node (2) and, in response thereto, transmitting to said second node (2) a third marked packet (Pke) of said bidirectional packet flow (Pk, Pk').

2. The method according to claim 1, wherein it further comprises:
b') by said second node (2), transmitting to said first node (1) unmarked packets of said bidirectional packet flow (Pk, Pk') until said first marked packet (Pks) is received from said first node (1) and, in response thereto, transmitting to said first node (1) a fourth marked packet (Pke') of said bidirectional packet flow (Pk, Pk').

3. The method according to claim 1 or 2, wherein the method steps are repeated cyclically.

4. The method according to any of the preceding claims, wherein said respective predefined times are a same predefined time.

5. The method according to claim 4, wherein said first node (1) and said second node (2) comprise reciprocally synchronized local clocks and wherein step a) is started when said local clocks indicate a time n x TO, n being an integer index and TO being a predefined period.

6. The method according to claim 5, wherein said predefined period TO is higher than a maximum round-trip time plus a maximum one-way delay between said first node (1) and said second node (2).

7. The method according to claim 6, wherein said predefined period TO is set higher than 3 times a calculated round-trip time between said first node (1) and said second node (2).

8. The method according to any of the preceding claims, wherein said first marked packet (Pks) and said third marked packet (Pke) comprise different marking values.

9. A method for performing a one-way delay measurement on a bidirectional packet flow (Pk, Pk') carrying live traffic exchanged between a first node (1) and a second node (2) of a packet-switched communication network (100), said method comprising the steps of the method according to any of claims 1 to 8, and:
d) by a measurement point (10) placed on a path of said bidirectional packet flow, detecting said first marked packet (Pks) and said third marked packet (Pke), and providing said one-way delay measurement based on a detection time of said first marked packet (Pks) and/or a detection time of said third marked packet (Pke).

10. The method according to claim 9, wherein step d) comprises providing a one-way delay measurement from said second node (2) to said first node (1) as a time lapsing between detection of said first marked packet (Pks) and detection of said third marked packet (Pke).

11. The method according to claim 9 or 10, wherein said measurement point (10) is synchronized with said first node (1) and wherein step d) comprises providing a one-way delay measurement from said first node (1) to said measurement point (10) as a time lapsing between transmission of said first marked packet (Pks) and detection of said first marked packet (Pks).

12. The method according to claim 9 when dependent on claim 2, further comprising: c) by said first node (1), transmitting to said second node (2) unmarked packets of said bidirectional packet flow (Pk, Pk') until said fourth marked packet (Pke') is received from said second node (2) and, in response thereto, transmitting to said second node (2) a fifth marked packet (PkRT) of said bidirectional packet flow (Pk, Pk'), wherein step d) also comprises providing a round-trip time measurement between said first node (1) and said second node (2) as a time lapsing between detection of said first marked packet (Pks) and detection of said fifth marked packet ($Pk_{RT}$).

13. The method according to claim 9 when dependent on claim 2, further comprising: c) by said first node (1), transmitting to said second node (2) unmarked packets of said bidirectional packet flow (Pk, Pk') until said fourth marked packet (Pke') is received from said second node (2) and, in response thereto, transmitting to said second node (2) a fifth marked packet (PkRT) of said bidirectional packet flow (Pk, Pk'), wherein step d) further comprises providing a one-way delay measurement from said first node (1) to said second node (2) as a time lapsing between detection of said second marked packet (Pke) and detection of said fifth marked packet ($Pk_{RT}$).

14. A packet-switched communication network (100) comprising a first node (1) and a second node (2) exchanging a bidirectional packet flow carrying live traffic, wherein:

a) said first node (1) is configured to, at a first predefined time, transmit to said second node (2) a first marked packet (Pks) of said bidirectional packet flow (Pk, Pk') and said second node (2) is configured to, at a second predefined time, transmit to said first node (1) a second marked packet (Pks') of said bidirectional packet flow (Pk, Pk'), and

b) said first node (1) is further configured to transmit to said second node (2) unmarked packets of said bidirectional packet flow (Pk, Pk') until said second marked packet (Pks') is received from said second node (2) and, in response thereto, transmit to said second node (2) a third marked packet (Pke) of said bidirectional packet flow (Pk, Pk').

15. The packet-switched communication network (100) according to claim 14, further comprising a measurement point (10) placed on a path of said bidirectional packet flow, said measurement point (10) being configured to detect said first marked packet (Pks) and said third marked packet (Pke), and provide a one-way delay measurement based on a detection time of said first marked packet (Pks) and/or a detection time of said third marked packet (Pke).

**Patentansprüche**

1. Verfahren zum Übertragen eines zweiseitig gerichteten Paketstroms (Pk, Pk'), der Live-Datenverkehr befördert, der zwischen einem ersten Knoten (1) und einem zweiten Knoten (2) eines paketvermittelten Kommunikationsnetzwerks (100) ausgetauscht wird, wobei das Verfahren umfasst:

a) zu entsprechenden vordefinierten Zeitpunkten, Übertragen durch den ersten Knoten (1) eines ersten markierten Pakets (Pks) des zweiseitig gerichteten Paketstroms (Pk, Pk') an den zweiten Knoten (2) und Übertragen durch den zweiten Knoten (2) eines zweiten markierten Pakets (Pke) des zweiseitig gerichteten Paketstroms (Pk, Pk') an den ersten Knoten (1); und

b) Übertragen durch den ersten Knoten (1) unmarkierter Pakete des zweiseitig gerichteten Paketstroms (Pk, Pk') an den zweiten Knoten (2), bis das zweite markierte Paket (Pks') von dem zweiten Knoten (2) empfangen wird, und, in Antwort darauf, Übertragen an den zweiten Knoten (2) eines dritten markierten Pakets (Pke) des zweiseitig gerichteten Paketstroms (Pk, Pk').

2. Verfahren nach Anspruch 1, wobei es weiter umfasst:
b') Übertragen durch den zweiten Knoten (2) unmarkierter Pakete des zweiseitig gerichteten Paketstroms (Pk, Pk') an den ersten Knoten (1), bis das erste markierte Paket (Pks) von dem ersten Knoten (1) empfangen wird, und, in Antwort darauf, Übertragen eines vierten markierten Pakets (Pke') des zweiseitig gerichteten Paketstroms (Pk, Pk') an den ersten Knoten (1).

3. Verfahren nach Anspruch 1 oder 2, wobei die Verfahrensschritte zyklisch wiederholt werden.

4. Verfahren nach einem der vorstehenden Ansprüche, wobei die jeweiligen vordefinierten Zeitpunkte im Wesentlichen ein gleicher vordefinierter Zeitpunkt sind.

5. Verfahren nach Anspruch 4, wobei der erste Knoten (1) und der zweite Knoten (2) reziprok synchronisierte lokale Takte umfassen und wobei Schritt a) gestartet wird, wenn die lokalen Takte einen Zeitpunkt n x T0 angeben, wobei n ein ganzzahliger Index ist und T0 eine vordefinierte Periode ist.

6. Verfahren nach Anspruch 5, wobei die vordefinierte Periode T0 höher ist als eine maximale Umlaufzeit plus eine maximale Einwegverzögerung zwischen dem ersten Knoten (1) und dem zweiten Knoten (2).

7. Verfahren nach Anspruch 6, wobei die vordefinierte Periode T0 höher eingestellt ist als ein Dreifaches einer berechneten Umlaufzeit zwischen dem ersten Knoten (1) und dem zweiten Knoten (2).

8. Verfahren nach einem der vorstehenden Ansprüche, wobei das erste markierte Paket (Pks) und das dritte markierte Paket (Pke) verschiedene Markierungswerte umfassen.

9. Verfahren zum Durchführen einer Einwegverzögerungsmessung an einem zweiseitig gerichteten Paketstrom (Pk, Pk'), der Live-Datenverkehr befördert, der zwischen einem ersten Knoten (1) und einem zweiten Knoten (2) eines paketvermittelten Kommunikationsnetzwerks (100) ausgetauscht wird, wobei das Verfahren die Schritte des Verfahrens nach einem der Ansprüche 1 bis 8 umfasst, und:

d) durch einen Messpunkt (10), der auf einem Pfad des zweiseitig gerichteten Paketstroms platziert ist, Detektieren des ersten markierten Pakets (Pks) und des dritten markierten Pakets (Pke) und Bereitstellen der Einwegverzögerungsmessung basierend auf einem Detektionszeitpunkt des ersten markierten Pakets (Pks) und/oder einem Detektionszeitpunkt des dritten markierten Pakets (Pke).

10. Verfahren nach Anspruch 9, wobei Schritt d) Bereitstellen einer Einwegverzögerungsmessung von dem zweiten Knoten (2) an den ersten Knoten (1) umfasst, während eine Zeit zwischen Detektion des ersten markierten Pakets (Pks) und Detektion des dritten markierten Pakets (Pke) verstreicht.

11. Verfahren nach Anspruch 9 oder 10, wobei der Messpunkt (10) mit dem ersten Knoten (1) synchronisiert ist und wobei Schritt d) Bereitstellen einer Einwegverzögerungsmessung von den ersten Knoten (1) an den Messpunkt (10) umfasst, während eine Zeit zwischen Übertragung des ersten markierten Pakets (Pks) und Detektion des ersten markierten Pakets (Pks) verstreicht.

12. Verfahren nach Anspruch 9, wenn von Anspruch 2 abhängig, weiter umfassend: c) Übertragen durch den ersten Knoten (1) unmarkierter Pakete des zweiseitig gerichteten Paketstroms (Pk, Pk'), an den zweiten Knoten (2), bis das vierte markierte Paket (Pke') von dem zweiten Knoten (2) empfangen wird, und, in Antwort darauf, Übertragen eines fünften markierten Pakets ($Pk_{RT}$) des zweiseitig gerichteten Paketstroms (Pk, Pk') an den zweiten Knoten (2), wobei Schritt d) auch Bereitstellen einer Umlaufzeitmessung zwischen dem ersten Knoten (1) und dem zweiten Knoten (2) umfasst, während eine Zeit zwischen Detektion des ersten markierten Pakets (Pks) und Detektion des fünften markierten Pakets ($Pk_{RT}$) verstreicht.

13. Verfahren nach Anspruch 9, wenn von Anspruch 2 abhängig, weiter umfassend: c) Übertragen durch den ersten Knoten (1) unmarkierter Pakete des zweiseitig gerichteten Paketstroms (Pk, Pk'), an den zweiten Knoten (2), bis das vierte markierte Paket (Pke') von dem zweiten Knoten (2) empfangen wird, und, in Antwort darauf, Übertragen eines fünften markierten Pakets ($Pk_{RT}$) des zweiseitig gerichteten Paketstroms (Pk, Pk') an den zweiten Knoten (2), wobei Schritt d) weiter Bereitstellen einer Einwegverzögerungsmessung von dem ersten Knoten (1) an den zweiten Knoten (2) umfasst, während eine Zeit zwischen Detektion des zweiten markierten Pakets (Pke) und Detektion des fünften markierten Pakets ($Pk_{RT}$) verstreicht.

14. Paketvermitteltes Kommunikationsnetzwerk (100), das einen ersten Knoten (1) und einen zweiten Knoten (2) umfasst, die einen zweiseitig gerichteten Paketstrom austauschen, der Live-Datenverkehr befördert, wobei:

a) der erste Knoten (1) konfiguriert ist, zu einem ersten vordefinierten Zeitpunkt ein erstes markiertes Paket (Pks) des zweiseitig gerichteten Paketstroms (Pk, Pk') an den zweiten Knoten (2) zu übertragen, und der zweite Knoten (2) konfiguriert ist, zu einem zweiten vordefinierten Zeitpunkt ein zweites markiertes Paket (Pks') des zweiseitig gerichteten Paketstroms (Pk, Pk') an den ersten Knoten (1) zu übertragen; und

b) der erste Knoten (1) weiter konfiguriert ist, unmarkierte Pakete des zweiseitig gerichteten Paketstroms (Pk, Pk') an den zweiten Knoten (2) zu übertragen, bis das zweite markierte Paket (Pks') von dem zweiten Knoten (2) empfangen wird, und, in Antwort darauf, ein drittes markiertes Paket (Pke) des zweiseitig gerichteten Paketstroms (Pk, Pk') an den zweiten Knoten (2) zu übertragen.

15. Paketvermitteltes Kommunikationsnetzwerk (100) nach Anspruch 14, weiter umfassend einen Messpunkt (10), der auf einem Pfad des zweiseitig gerichteten Paketstroms platziert ist, wobei der Messpunkt (10) konfiguriert ist, das erste markierte Paket (Pks) und das dritte markierte Paket (Pke) zu detektieren und eine Einwegverzögerungsmessung basierend auf einem Detektionszeitpunkt des ersten markierten Pakets (Pks) und/oder einem Detektionszeitpunkt des dritten markierten Pakets (Pke) bereitzustellen.

**Revendications**

1. Procédé de transmission d'un flux de paquets bidirectionnel (Pk, Pk') transportant du trafic en direct échangé entre un premier nœud (1) et un deuxième nœud (2) d'un réseau de communication à commutation de paquets (100), ledit procédé comprenant le fait de :

a) à des instants prédéfinis respectifs, par le biais dudit premier nœud (1), transmettre, audit deuxième nœud (2), un premier paquet marqué (Pks) dudit flux de paquets bidirectionnel (Pk, Pk'), et par le biais dudit deuxième nœud (2), transmettre, audit premier nœud (1), un deuxième paquet marqué (Pke) dudit flux de paquets bidirectionnel (Pk, Pk') ; et

b) par le biais dudit premier nœud (1), transmettre, audit deuxième nœud (2), des paquets non marqués dudit flux de paquets bidirectionnel (Pk, Pk') jusqu'à ce que ledit deuxième paquet marqué (Pks') soit reçu dudit deuxième nœud (2) et, en réponse à cela, transmettre, audit deuxième nœud (2), un troisième paquet marqué (Pke) dudit flux de paquets bidirectionnel (Pk, Pk').

2. Procédé selon la revendication 1, dans lequel le procédé comprend en outre le fait de :
b') par le biais dudit deuxième nœud (2), transmettre, audit premier nœud (1), des paquets non marqués dudit flux de paquets bidirectionnel (Pk, Pk'), jusqu'à ce que ledit premier paquet marqué (Pks) soit reçu dudit premier nœud (1) et, en réponse à cela, transmettre, audit premier nœud (1), un quatrième paquet marqué (Pke') dudit flux de paquets bidirectionnel (Pk, Pk').

3. Procédé selon la revendication 1 ou 2, dans lequel les étapes du procédé sont répétées de manière cyclique.

4. Procédé selon l'une quelconque des revendications précédentes, dans lequel lesdits instants prédéfinis respectifs sont un même instant prédéfini.

5. Procédé selon la revendication 4, dans lequel ledit premier nœud (1) et ledit deuxième nœud (2) comprennent des horloges locales synchronisées réciproquement, et dans lequel l'étape a) est lancée lorsque lesdites horloges locales indiquent un temps n x T0, n étant un indice entier et T0 étant une période prédéfinie.

6. Procédé selon la revendication 5, dans lequel ladite période prédéfinie T0 est supérieure à un temps aller et retour maximal plus un retard unidirectionnel maximal entre ledit premier nœud (1) et ledit deuxième nœud (2).

7. Procédé selon la revendication 6, dans lequel ladite période prédéfinie T0 est réglée à une valeur supérieure à trois fois un temps aller et retour calculé entre ledit premier nœud (1) et ledit deuxième nœud (2).

8. Procédé selon l'une quelconque des revendications précédentes, dans lequel ledit premier paquet marqué (Pks) et ledit troisième paquet marqué (Pke) comprennent des valeurs de marquage différentes.

9. Procédé pour effectuer une mesure de retard unidirectionnel sur un flux de paquets bidirectionnel (Pk, Pk') transportant du trafic en direct échangé entre un premier nœud (1) et un deuxième nœud (2) d'un réseau de communication à commutation de paquets (100), ledit procédé comprenant les étapes du procédé selon l'une quelconque des revendications 1 à 8, et comprenant le fait de :
d) par le biais d'un point de mesure (10) placé sur un chemin dudit flux de paquets bidirectionnel, détecter ledit premier paquet marqué (Pks) et ledit troisième paquet marqué (Pke), et fournir ladite mesure de retard unidirectionnel sur la base d'un instant de détection dudit premier paquet marqué (Pks) et/ou d'un instant de détection dudit troisième paquet marqué (Pke).

10. Procédé selon la revendication 9, dans lequel l'étape d) comprend la fourniture d'une mesure de retard unidirectionnel dudit deuxième nœud (2) audit premier nœud (1) en tant qu'un temps écoulé entre la détection dudit premier paquet marqué (Pks) et la détection dudit troisième paquet marqué (Pke).

11. Procédé selon la revendication 9 ou 10, dans lequel ledit point de mesure (10) est synchronisé avec ledit premier nœud (1), et dans lequel l'étape d) comprend la fourniture d'une mesure de retard unidirectionnel dudit premier nœud (1) audit point de mesure (10) en tant qu'un temps écoulé entre la transmission dudit premier paquet marqué (Pks) et la détection dudit premier paquet marqué (Pks).

12. Procédé selon la revendication 9, lorsqu'elle dépend de la revendication 2, comprenant en outre le fait de :
c) par le biais dudit premier nœud (1), transmettre, audit deuxième nœud (2), des paquets non marqués dudit flux de paquets bidirectionnel (Pk, Pk') jusqu'à ce que ledit quatrième paquet marqué (Pke') soit reçu dudit deuxième nœud (2) et, en réponse à cela, transmettre, audit deuxième nœud (2), un cinquième paquet marqué ($Pk_{RT}$) dudit flux de paquets bidirectionnel (Pk, Pk'), dans lequel l'étape d) comprend également la fourniture d'une mesure de temps aller et retour entre ledit premier nœud (1) et ledit deuxième nœud (2) en tant qu'un temps écoulé entre la détection dudit premier paquet marqué (Pks) et la détection dudit cinquième paquet marqué ($Pk_{RT}$).

**13.** Procédé selon la revendication 9, lorsqu'elle dépend de la revendication 2, comprenant en outre le fait de :
c) par le biais dudit premier nœud (1), transmettre, audit deuxième nœud (2), des paquets non marqués dudit flux de paquets bidirectionnel (Pk, Pk') jusqu'à ce que ledit quatrième paquet marqué (Pke') soit reçu dudit deuxième nœud (2) et, en réponse à cela, transmettre, audit deuxième nœud (2), un cinquième paquet marqué ($Pk_{RT}$) dudit flux de paquets bidirectionnel (Pk, Pk'), dans lequel l'étape d) comprend en outre la fourniture d'une mesure de retard unidirectionnel entre ledit premier nœud (1) et ledit deuxième nœud (2) en tant qu'un temps écoulé entre la détection dudit deuxième paquet marqué (Pke) et la détection dudit cinquième paquet marqué ($Pk_{RT}$).

**14.** Réseau de communication à commutation de paquets (100) comprenant un premier nœud (1) et un deuxième nœud (2) échangeant un flux de paquets bidirectionnel transportant du trafic en direct, dans lequel :

a) ledit premier nœud (1) est configuré pour, à un premier instant prédéfini, transmettre, audit deuxième nœud (2), un premier paquet marqué (Pks) dudit flux de paquets bidirectionnel (Pk, Pk'), et ledit deuxième nœud (2) est configuré pour, à un deuxième instant prédéfini, transmettre, audit premier nœud (1), un deuxième paquet marqué (Pks') dudit flux de paquets bidirectionnel (Pk, Pk') ; et
b) ledit premier nœud (1) est en outre configuré pour transmettre, audit deuxième nœud (2), des paquets non marqués dudit flux de paquets bidirectionnel (Pk, Pk'), jusqu'à ce que ledit deuxième paquet marqué (Pks') soit reçu dudit deuxième nœud (2) et, en réponse à cela, transmettre, audit deuxième nœud (2), un troisième paquet marqué (Pke) dudit flux de paquets bidirectionnel (Pk, Pk').

**15.** Réseau de communication à commutation de paquets (100) selon la revendication 14, comprenant en outre un point de mesure (10) placé sur un chemin dudit flux de paquets bidirectionnel, ledit point de mesure (10) étant configuré pour détecter ledit premier paquet marqué (Pks) et ledit troisième paquet marqué (Pke), et fournir une mesure de retard unidirectionnel sur la base d'un instant de détection dudit premier paquet marqué (Pks) et/ou d'un instant de détection dudit troisième paquet marqué (Pke).

## Fig. 1

## Fig. 2

30 ── start

transmit Pk (Pk') with
MF = M0 ── 31

32
n ── t = n x T0

y

transmit Pks (Pks') with
MF = M1 ── 33

transmit Pk (Pk') with
MF = M0 ── 34

35
n ── Pks' (Pks) with
MF = M1?

y

transmit Pke (Pke') with
MF = M1 ── 36

37
end of
measurement?

end

<u>Fig. 3</u>

t = T0 ---- Pks

Pks' ---- t = T0

t = T0+OWD(1→2)

t = T0+OWD(2→1) ---- Pke'

Pke

t = 2T0 ---- Pks

Pks' ---- t = 2T0

t = 2T0+OWD(1→2)

t = 2T0+OWD(2→1) ---- Pke'

Pke

## Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011079857 A

- WO 2019206862 A, Mizrahi

**Non-patent literature cited in the description**

- **B. TRAMMEL et al.** *Internet draft "The addition of a Spin Bit to the QUIC Transport Protocol draft-trammel-quic-spin-01*, 13 December 2017
- **FIOCCOLA et al.** Alternate-Marking Method for Passive and Hybrid Performance Monitoring. *IETF RFC 8321*, 30 January 2018

- **COCIGLIO et al.** Client-Server Explicit Performance Measurements. *draft-cfb-ippm-spinbit-measurements-02.txt*, 03 July 2020